# EUROPEAN PATENT SPECIFICATION

(11) **EP 1 487 252 B1**
(45) Date of publication and mention of the grant of the patent: **29.11.2006**
(21) Application number: 03700955.2
(22) Date of filing: 28.01.2003
(51) Int. Cl.: A01D 34/00, A01B 69/00

(54) **AUTONOMOUS LAND MAINTENANCE EQUIPMENT**
AUTOMATISCHES GERÄT ZUR BEARBEITUNG VON LAND
EQUIPEMENT AUTONOME D'ENTRETIEN DE TERRES

(30) Priority: 26.03.2002 GB 0207111
(43) Date of publication of application: 22.12.2004
(73) Proprietor: McMurtry Ltd, Dursley, Gloucestershire GL11 5AT (GB)
(72) Inventor: McMURTRY, Richard, Bristol BS6 6UH (GB); McMURTRY, Ben, Horsley, Gloucestershire GL6 0PF (GB)
(74) Representative: Cheyne, John Robert Alexander M.
(86) International application number: PCT/GB2003/000348
(87) International publication number: WO 2003/081983

(56) References cited:
- EP-A- 0 726 182
- EP-A- 1 142 466
- WO-A-02/08842
- WO-A-97/49528
- DE-A- 3 918 867
- DE-A- 4 022 699
- DE-A- 19 956 994
- FR-A- 2 703 211
- GB-A- 2 230 414
- US-A- 4 546 840
- US-A- 5 193 882
- US-B1- 6 338 013
- PATENT ABSTRACTS OF JAPAN vol. 014, no. 562 (C-0788), 13 December 1990 (1990-12-13) & JP 02 242602 A (ISEKI & CO LTD), 27 September 1990 (1990-09-27)

## Description

### TECHNICAL FIELD OF THE INVENTION

This invention relates to autonomous land maintenance equipment, and more specifically to autonomous land maintenance equipment that has emptying means.

### BACKGROUND TO THE INVENTION

Conventionally land maintenance such as grass mowing is carried out by use of a manually operated machine. Some mowing machines are capable of carrying out various tasks other than mowing grass, such as leaf collection, scarifying, slitting and hollow coring, all of which can involve collecting debris. For the purposes of describing the background to related art, mowing grass will be used as the example. Whilst the mowing operation is carried out, cut grass is collected in a bag or box carried on the machine. Often the bag or box (otherwise known as a catcher) reaches its capacity several times during the mowing task and therefore has to be emptied before the task can continue. Generally the collected grass cuttings are deposited in one particular area, either on the ground or in a trailer or skip, which will generate a pile after several box or bag loads are emptied. The grass collected at sports facilities is mainly removed from the site either by transferring the pile from the ground to a skip or trailer or by just using the trailer or skip, thus keeping the area tidy. The operation of transferring the grass cuttings from the mower to the deposit point involves the operator doing one of two things depending upon the machine used. Some machines require the operator to lift the bag or box from the machine and manually empty it by shaking it at about standing height so the grass falls on top of a pile or into a trailer or skip. Other machines are fitted with an automatic mechanism that empties the grass at the pull of a lever or the press of a button.

Autonomous vehicles require obstacle detection devices to aid the vehicle in carrying out its task, and more importantly to provide a method of bringing the vehicle to a safe standstill if a fault should occur. There are many different devices used by autonomous vehicles including various different designs of physical sensing bumpers, ultrasonic sensors, laser reflected detection systems or any other emitted/reflected.energy wave detection system. Any system used has to be fail safe to protect the vehicle and any person in the working environment and should not be over ridden when the, vehicle operates autonomously. If the obstacle detection devices detect an obstacle or person, the vehicle must come to a complete stop before the main structure of the vehicle hits the obstacle and causes any damage or injures the person. This means that whatever system of obstacle detection is used, the main body of a vehicle will never be any closer than its stopping distance from an obstacle during normal working conditions.

A problem that arises is that any waste material deposited within this range will trigger the obstacle detection device and stop the vehicle. As a result, known automated land maintenance equipment either requires the machine to be shut down and the grass catcher manually emptied, or continuously disperses the grass cuttings, for example as a mulch, as it operates.

### SUMMARY OF THE INVENTION

According to the present invention there is provided automated land maintenance equipment that comprises a vehicle, where the vehicle comprises operating means for performing a maintenance operation; receiving means for receiving waste material delivered from the operating means; guidance means for controlling the movement of the vehicle; and obstacle detecting means having a predetermined detecting range; and the equipment further comprises emptying means for emptying the receiving means; wherein, upon activation of the emptying means, the waste material is deposited beyond the obstacle detecting range.

Waste material may comprise grass cuttings, leaves, hollow cores, thatch or general litter.

The invention is applicable to all variants of land maintenance equipment for commercial or domestic use. Embodiments in accordance with the present invention have guidance means that comprise any of the following positioning systems to enable it to navigate around the work environment autonomously: GPS, DGPS, Real Time Kinematic GPS, Laser scanner, buried transponders or wire guidance. The receiving means may be either a bag or box container that may be positioned to the front or the rear of the vehicle. The vehicle may be able to navigate its way to a grass/debris collection point that may be done either when the receiving means is full or just before it is full.

In preferred embodiments of the invention, the emptying means comprises a supporting arm which carries the receiving means and which is mounted on a frame of the vehicle for pivotal movement about a pivot axis which itself is displaceable relatively to the frame of the vehicle, an actuator being provided for displacing the pivot axis relatively to the frame of the vehicle, and control means being provided to control movement of the supporting arm about the pivot axis.

Preferably, the support arm is mounted on a lever for pivotal movement relative to the lever about the pivot axis, the lever being pivotably mounted on the frame of the vehicle, and the actuator acting between the frame of the vehicle and the lever..

Preferably, the control means comprises a cable that extends between the frame of the vehicle and a point on the support arm that is spaced from the pivot axis.

Preferably, the emptying means, when activated, displaces the receiving means from a lower level, at which the receiving means is positioned to receive waste material delivered from the operating means, to a higher level from which the waste material is deposited from the receiving means.

The receiving means may be lifted to the required position by a controlled actuated mechanism, constituting the emptying means, onboard the autonomous vehicle to empty-it; or alternatively a larger transporting trailer or skip at the collection point may have a controlled actuated mechanism, constituting the emptying means, that may lift the receiving means from the autonomous vehicle and empty it. The receiving means then may or may not be replaced. The receiving means may be self-replenishing in that the receiving means may be deposited in its entirety and replaced with further receiving means already on the vehicle.

The obstacle detecting means may comprise physical tactile bumpers, ultrasonic sensors or any emitted wave detection system. Any of these obstacle detection systems may be part of the main structure of the vehicle and remain in place whilst said controlled actuated mechanism lifts the receiving means from its normal working position.

Alternatively the obstacle detecting means may be attached to the receiving means or controlled actuated mechanism and may be lifted. In this case, the range of the obstacle detection device applies when the receiving means is in its normal working position.

### BRIEF DESCRIPTION OF THE DRAWINGS

For a better understanding of the present invention and to show how it may be carried into effect, reference will now be made by way of example to the accompanying drawings, in which:
Figure 1 is a side elevation of an autonomous grass/lawn mower showing the vehicle with the grass catcher in its normal working position.
Figure 2 corresponds to Figure 1 but shows the vehicle with a protective cowling removed.
Figure 3 shows the vehicle of Figure 1 with the grass catcher in the elevated position for grass dumping.
Figures 4, 5 and 6 correspond to Figure 1 but show alternative embodiments.
Figure 7 corresponds to Figure 3 but shows an alternative embodiment.

### DETAILED DESCRIPTION OF THE PREFERRED EMBODIMENTS

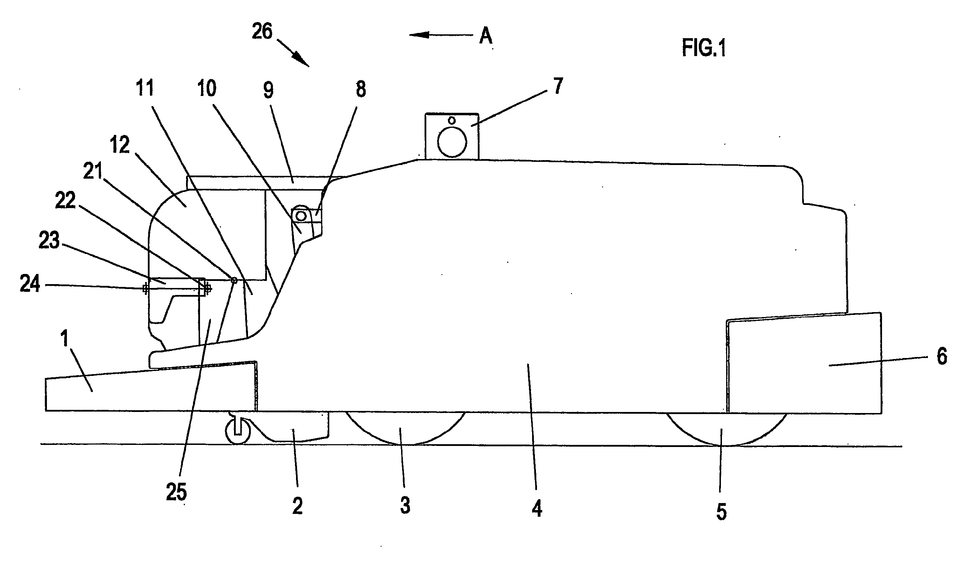

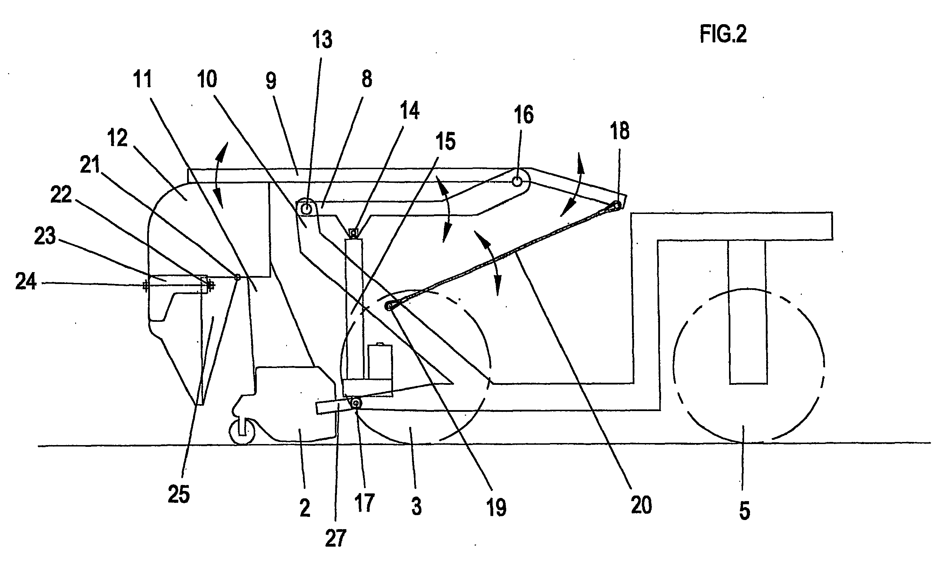

Figure 1 shows autonomous land maintenance equipment in the form of a grass/lawn mower 26 having a protective cowling 4 supported by a chassis 10 seen in Figure 2. Ground engaging wheels 3, 5 are used to move the mower 26. The mower has guidance means that comprises a laser scanner 7 that is used to determine the vehicle position in the task environment. The cowling 4 supports a front bumper 1 and rear bumper 6 acting as obstacle detecting means. The distance between the front of the cowling 4 and the front of the front bumper is equivalent to the stopping distance of the vehicle 26 as it moves in direction A. The grass/lawn mower 26 uses operating means in the form of a cutter unit 2 to cut the grass; the grass is then delivered to the receiving means in the form of a grass catcher, which comprises upper 12, and lower 25, sections via a shoot 11. The grass catcher 12, 25 is attached to the main chassis 10 by a lifting arm consisting of an upper arm 9 and a lower arm 8.

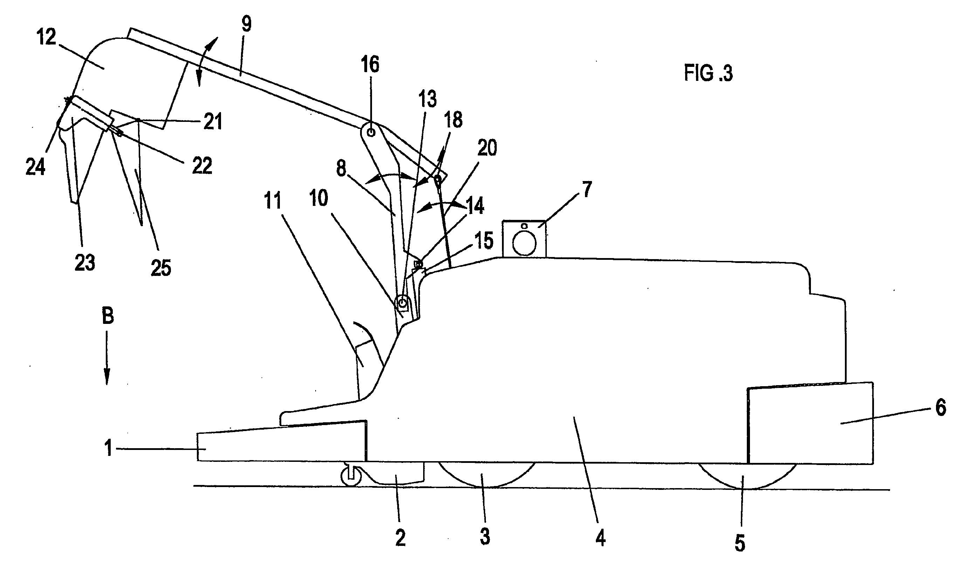

The preferred workings of the invention of the grass/lawn mower 26 are shown in more detail in Figure 2. The mower 26 has emptying means for emptying the grass catcher 12, 25. This emptying means comprises lower and upper arms 8, 9 operated by a lift actuator 15. The method of lifting the grass catcher 12, 25 beyond the front bumper 1 vertically and horizontally is achieved by extending the lift actuator 15. The lift actuator 15 is rotatable about a location pin 17 and acts on a lower arm pin 14. The lower arm pin 14 is rotatable within the assembly of lower arm 8. The lower arm 8 is rotatable about a horizontal pin 13 so that when the lift actuator 15 is extended to act on the lower arm pin 14, the lower arm 8 rotates anticlockwise about pin 13. The lower arm 8 is in turn attached to the upper arm 9 by an upper arm pin 16. The upper arm 9 rotates about the upper arm pin 16 as the lift actuator 15 is extended, as it is attached to the chassis 10 by a cable 20 which may pull the back section of the upper arm 9 down, thus lifting the forward section up. The cable 20 rotates about a fixed point 19 on the chassis 10. The result of the extension of the actuator may be seen in Figure 3 where the grass catcher 12, 25 is lifted clear of the normal working extremities of the lawn/grass mower 26 beyond the front bumper 1, and therefore beyond the range of the obstacle detecting means. The grass cuttings are then released from the grass catcher 12, 25 by extending a grass catcher actuator 23 fixed at a pin 24 and acting on a pin 22. The extension rotates the lower section grass catcher 25 about a hinge 21 allowing the grass cuttings to fall in the direction of arrow B. When all grass cuttings have been dumped, reversing the grass catcher actuator 23 closes the lower grass catcher 25. When the grass catcher 12, 25 is closed, the extension of the actuator 15 is reversed thus allowing the control mechanism to return to its normal working position as shown in Figure 1.

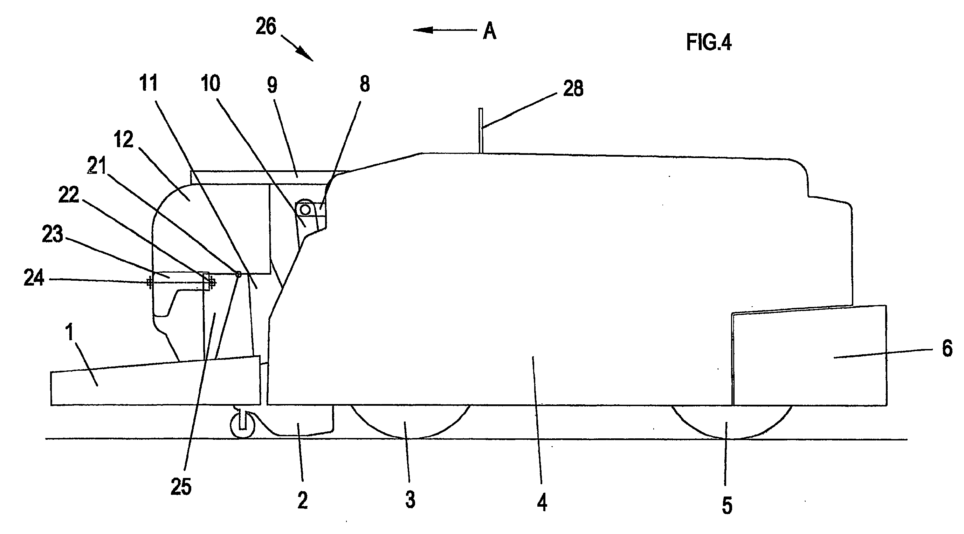

Figure 4 shows an autonomous grass/lawn mower 26 with an aerial 28, which is used for receiving radio signals used in positioning systems such as GPS, DGPS and Real Time Kinematic GPS. The front bumper 1 is attached to the upper grass catcher 12 and is lifted when the emptying mechanism described before is activated.

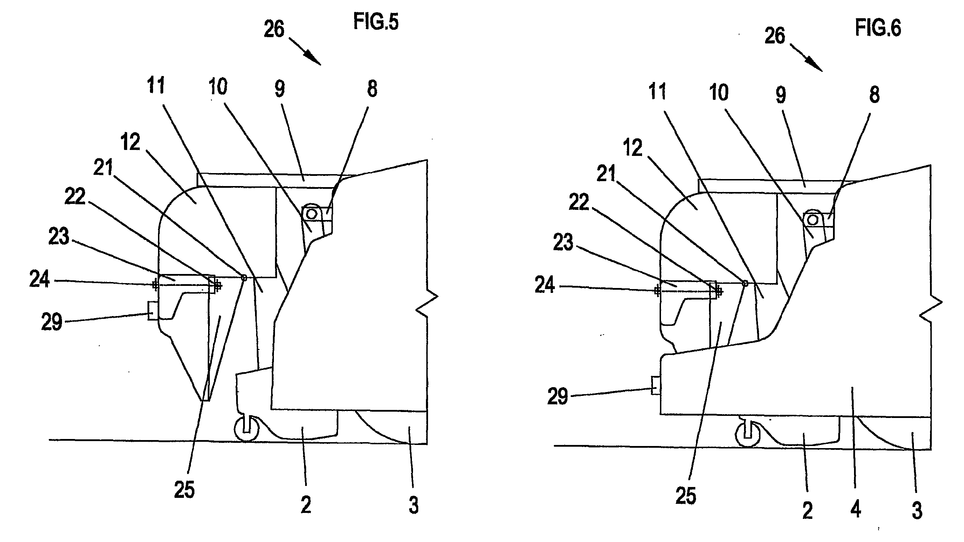

Figure 5 shows an autonomous grass/lawn mower 26 with an energy wave emitter and detector obstacle detection device 29 fitted to the upper grass catcher 12. The energy wave emitter and detector obstacle detection device 29 will generate a stop signal for the autonomous grass/lawn mower if an obstacle is detected at a distance equal to the stopping distance of the vehicle.

In both of these embodiments, the obstacle detecting means is connected to the catcher 12 and is displaced from its normal working position when the emptying mechanism is activated. The emptying mechanism lifts the catcher 12 clear of the vehicle so that the waste material is deposited outside of the range of the obstacle detecting means when the detecting means is in its normal working position.

Figure 6 shows an autonomous grass/lawn mower 26 with an energy wave emitter and detector obstacle detection device fitted to the cowling 4. The energy wave emitter and detector obstacle detection device 29 will generate a stop signal for the autonomous grass/lawn mower if an obstacle is detected at a distance equal to the stopping distance of the vehicle.

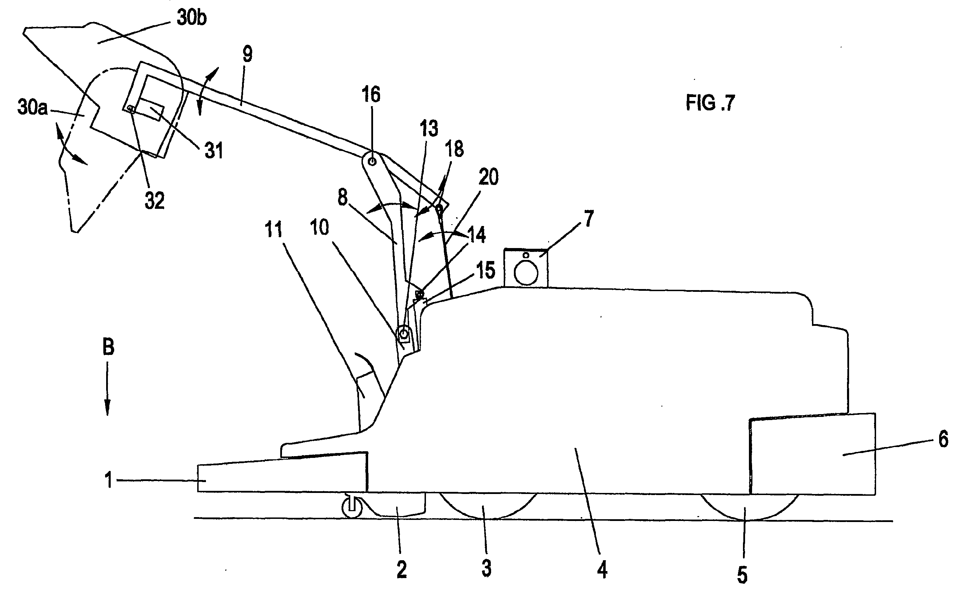

Figure 7 shows an autonomous grass/lawn mower with a grass catcher 30a, 30b in an elevated position. The grass catcher 30a is in the working position relative to the upper arm 9 and will remain in this position until the mechanism described previously reaches the position shown. The grass catcher 30a is rotated about a horizontal pivot 32 using an actuator 31 until the grass catcher position 30b is reached. At this point the grass cuttings will fall from the grass catcher 30b in the direction indicated by arrow B.

Although the invention has been described and illustrated with reference to specific illustrative embodiments thereof, it is not intended that the invention be limited to those illustrative embodiments. Those skilled in the art will recognise that variations and modifications can be made without departing from the scope of the invention as defined by the claims that follow.

## Claims

1. Automated land maintenance equipment comprising a vehicle (26), said vehicle (26) comprising:
operating means (2) for performing a maintenance operation;
receiving means (12,25) for receiving waste material delivered from the operating means (2);
guidance means (7;28) for controlling the movement of the vehicle; and
obstacle detecting means (1;29) having a predetermined detecting range;
the equipment further comprising:
emptying means (8,9,15) for emptying the receiving means (12,25);
wherein, upon activation of the emptying means (8,9,15), the waste material is deposited beyond the obstacle detecting range.

2. Automated land maintenance equipment as claimed in claim 1, wherein the emptying means (8,9,15) is mounted on the vehicle (26).

3. Automated land maintenance equipment as claimed in claim 2, wherein the emptying means (8,9,15) comprises a supporting arm (9) which carries the receiving means (12,25) and which is mounted on a frame (10) of the vehicle (26) for pivotal movement about a pivot axis (16) which itself is displaceable relatively to the frame (10) of the vehicle (26), an actuator (15) being provided for displacing the pivot axis (16) relatively to the frame (10) of the vehicle (26), and control means (20) being provided to control movement of the supporting arm (9) about the pivot axis (16).

4. Automated land maintenance equipment as claimed in claim 3, in which the support arm (9) is mounted on a lever (8) for pivotal movement relative to the lever (8) about the pivot axis (16), the lever (8) being pivotably mounted on the frame (10) of the vehicle (26), and the actuator (15) acting between the frame (10) of the vehicle (26) and the lever (8).

5. Automated land maintenance equipment as claimed in claim 3 or 4, in which the control means (20) comprises a cable (20) that extends between the frame (10) of the vehicle (26) and a point (18) on the support arm (9) which is spaced from the pivot axis (16).

6. Automated land maintenance equipment as claimed in any one of the preceding claims, in which the emptying means (8,9,15), when activated, displaces the receiving means (12,25) from a lower level, at which the receiving means (12,25) is positioned to receive waste material delivered from the operating means (2), to a higher level from which the waste material is deposited from the receiving means (12,25).

7. Automated land maintenance equipment as claimed in claim 1, wherein the emptying means (8,9,15) is separate from the vehicle (26).

8. Automated land maintenance equipment as claimed in any preceding claim, wherein the obstacle detecting means is a tactile sensing bumper (1).

9. Automated land maintenance equipment as claimed in claim 8 wherein the obstacle detecting means is mounted on the receiving means (12,25).

10. Automated land maintenance equipment as claimed in any one of claims 1 to 7 wherein the obstacle detecting means comprises an energy wave emitting and detecting device (29).

11. Automated land maintenance equipment as claimed in any preceding claim wherein the guidance means comprises a laser scanner (7).

12. Automated land maintenance equipment as claimed in any one of claims 1 to 10 wherein the guidance means comprises a Global Positioning System (GPS) receiver (28).

13. Automated land maintenance equipment as claimed in any preceding claim, wherein upon detection of an obstacle by the obstacle detecting means (1;29), the vehicle (26) ceases operation.

14. Automated land maintenance equipment as claimed in claim 13 wherein means is provided for preventing overriding of the obstacle detecting means (1;29), during normal operation of the equipment.

15. Automated land maintenance equipment as claimed in any preceding claim, wherein the operating means comprises grass cutting means (2).

## Patentansprüche

1. Automatisiertes Bodenpflegegerät, umfassend ein Fahrzeug (26), wobei das Fahrzeug (26) umfasst:
eine Betriebseinrichtung (2) zur Durchführung eines Pflegevorgangs;
eine Aufnahmeeinrichtung (12, 25) zur Aufnahme von durch die Betriebseinrichtung (2) angelieferten Abfallmaterials;
eine Führungseinrichtung (7; 28) zur Steuerung der Bewegung des Fahrzeugs; und
eine Hinderniserkennungseinrichtung (1; 29), die eine vorbestimmte Erkennungsreichweite aufweist;
ferner umfasst das Gerät eine Entleerungseinrichtung (8, 9, 15) zur Entleerung der Aufnahmeeinrichtung (12, 25),
durch die bei Aktivierung der Entleerungseinrichtung (8, 9, 15) das Abfallmaterial außerhalb der Hinderniserkennungsreichweite abgeladen wird.

2. Automatisiertes Bodenpflegegerät gemäß Anspruch 1, bei dem die Entleerungseinrichtung (8, 9, 15) am Fahrzeug (26) montiert ist.

3. Automatisiertes Bodenpflegegerät gemäß Anspruch 2, bei dem die Entleerungseinrichtung (8, 9, 15) einen Trägerarm (9) umfasst, der die Aufnahmeeinrichtung (12, 25) trägt und der an einem Rahmen (10) des Fahrzeugs (26) zur drehenden Bewegung um eine Drehachse (16) montiert ist, welche relativ zum Rahmen (10) des Fahrzeugs (26) verstellbar ist, einen Betätiger (15), der dazu gedacht ist, die Drehachse (16) relativ zum Rahmen (10) des Fahrzeugs (26) zu verstellen, und eine Regeleinrichtung (20), die dazu gedacht ist, die Bewegung des Trägerarms (9) um die Drehachse (16) zu regeln.

4. Automatisiertes Bodenpflegegerät gemäß Anspruch 3, bei dem der Trägerarm (9) an einen Hebel (8) zur drehenden Bewegung relativ zum Hebel (8) um die Drehachse (16) montiert ist, wobei der Hebel (8) drehbar an den Rahmen (10) des Fahrzeugs (26) montiert ist und der Betätiger (15) zwischen dem Rahmen (10) des Fahrzeugs (26) und dem Hebel (8) wirkt.

5. Automatisiertes Bodenpflegegerät gemäß Anspruch 3 oder 4, bei dem die Regeleinrichtung (20) ein Kabel (20) umfasst, welches sich zwischen dem Rahmen (10) des Fahrzeugs (26) und einem Punkt (18) auf dem Trägerarm (9), der von der Drehachse (16) beabstandet ist, erstreckt.

6. Automatisiertes Bodenpflegegerät gemäß einem der vorhergehenden Ansprüche, bei dem die Entleerungseinrichtung (8, 9, 15), wenn sie aktiviert ist, die Aufnahmeeinrichtung (12, 25) von einer unteren Ebene, in der die Aufnahmeeinrichtung (12, 25) positioniert ist, um von der Betriebseinrichtung (2) angeliefertes Abfallmaterial aufzunehmen, in eine höhere Ebene verstellt, aus welcher das Abfallmaterial von der Aufnahmeeinrichtung (12, 25) entfernt wird.

7. Automatisiertes Bodenpflegegerät gemäß Anspruch 1, bei dem die Entleerungseinrichtung (8, 9, 15) getrennt vom Fahrzeug (26) ist.

8. Automatisiertes Bodenpflegegerät gemäß einem der vorhergehenden Ansprüche, bei dem die Hinderniserkennungseinrichtung ein, eine Berührung erkennender Stoßfänger ist.

9. Automatisiertes Bodenpflegegerät gemäß Anspruch 8, bei dem die Hinderniserkennungseinrichtung an der Aufnahmeeinrichtung (12, 25) montiert ist.

10. Automatisiertes Bodenpflegegerät gemäß einem der Ansprüche 1 bis 7, bei dem die Hinderniserkennungseinrichtung eine Energiewellen aussendende und erkennende Vorrichtung umfasst.

11. Automatisiertes Bodenpflegegerät gemäß einem der vorhergehenden Ansprüche, bei dem die Führungseinrichtung einen Laserscanner (7) umfasst.

12. Automatisiertes Bodenpflegegerät gemäß einem der Ansprüche 1 bis 10, bei dem die Führungseinrichtung ein Global-Positioning-System (GPS)-Empfänger (28) umfasst.

13. Automatisiertes Bodenpflegegerät gemäß einem der vorhergehenden Ansprüche, bei dem bei Erkennung eines Hindernisses durch die Hinderniserkennungseinrichtung (1, 29) das Fahrzeug (26) den Betrieb einstellt.

14. Automatisiertes Bodenpflegegerät gemäß Anspruch 13, bei dem Einrichtungen zur Vermeidung des Übersteuerns der Hinderniserkennungseinrichtung (1, 29) während des normalen Betriebs des Geräts vorgesehen sind.

15. Automatisiertes Bodenpflegegerät gemäß einem der vorhergehenden Ansprüche, bei dem die Betriebseinrichtung eine Grassschneideeinrichtung (2) umfasst.

## Revendications

1. Equipement automatisé d'entretien de terrain comprenant un véhicule (26), ledit véhicule (26) comprenant :
un moyen (2) de travail destiné à effectuer un travail d'entretien ;
un moyen (12, 25) de réception destiné à recevoir de la matière de déchet délivrée par le moyen (2) de travail ;
un moyen (7 ; 28) de guidage destiné à commander le déplacement du véhicule ; et
un moyen (1 ; 29) de détection d'obstacle ayant une plage de détection prédéterminée ;
l'équipement comprenant en outre :
un moyen (8, 9, 15) de vidage destiné à vider le moyen (12, 25) de réception ;
dans lequel, lors de l'activation du moyen (8, 9, 15) de vidage, la matière de déchet est déposée au-delà de la portée de détection d'obstacle.

2. Equipement automatisé d'entretien de terrain selon la revendication 1, dans lequel le moyen (8, 9, 15) de vidage est monté sur le véhicule (26).

3. Equipement automatisé d'entretien de terrain selon la revendication 2, dans lequel le moyen (8, 9, 15) de vidage comprend un bras (9) de support qui supporte le moyen (12, 25) de réception et qui est monté sur un bâti (12) du véhicule (26) pour mouvement pivotant autour d'un axe (16) de pivot qui peut lui-même être décalé par rapport au bâti (10) du véhicule (26), un actionneur (15) étant prévu pour décaler l'axe (16) de pivot par rapport au bâti (10) du véhicule (26), et un moyen (20) de commande étant prévu pour commander le mouvement du bras (9) de support autour de l'axe (16) de pivot.

4. Equipement automatisé d'entretien de terrain selon la revendication 3, dans lequel le bras (9) de support est monté sur un levier (8) pour mouvement pivotant par rapport au levier (8) autour de l'axe (16) de pivot, le levier (8) étant monté de manière pivotante sur le bâti (10) du véhicule (26), et l'actionneur (15) agissant entre le bâti (10) du véhicule (26) et le levier (8).

5. Equipement automatisé d'entretien de terrain selon la revendication 3 ou 4, dans lequel le moyen (20) de commande comprend un câble (20) qui s'étend entre le bâti (10) du véhicule (26) et un point (18) qui se trouve sur le bras (9) de support, lequel est espacé de l'axe (16) de pivot.

6. Equipement automatisé d'entretien de terrain selon l'une quelconque des revendications précédentes, dans lequel le moyen (8, 9, 15) de vidage, lorsqu'il est activé, déplace le moyen (12, 25) de réception d'un niveau bas, au niveau duquel le moyen (12, 25) de réception est positionné pour recevoir la matière de déchet délivrée par le moyen (2) de travail, à un niveau haut à partir duquel la matière de déchet est déchargée du moyen (12, 25) de réception.

7. Equipement automatisé d'entretien de terrain selon la revendication 1, dans lequel le moyen (8, 9, 15) de vidage est un élément distinct du véhicule (26).

8. Equipement automatisé d'entretien de terrain selon l'une quelconque des revendications précédentes, dans lequel le moyen de détection d'obstacle est un tampon-amortisseur à détection tactile (1).

9. Equipement automatisé d'entretien de terrain selon la revendication 8, dans lequel le moyen de détection d'obstacle est monté sur le moyen (12, 25) de réception.

10. Equipement automatisé d'entretien de terrain selon l'une quelconque des revendications 1 à 7, dans lequel le moyen de détection d'obstacle comprend un dispositif émetteur et détecteur (29) d'onde d'énergie.

11. Equipement automatisé d'entretien de terrain selon l'une quelconque des revendications précédentes, dans lequel le moyen de guidage comprend un dispositif de balayage à laser (7).

12. Equipement automatisé d'entretien de terrain selon l'une quelconque des revendications 1 à 10, dans lequel le moyen de guidage comprend un récepteur de système mondial de localisation (28) (GPS pour "Global Positioning System").

13. Equipement automatisé d'entretien de terrain selon l'une quelconque des revendications précédentes, dans lequel, lors de la détection d'un obstacle par le moyen (1 ; 29) de détection d'obstacle, le véhicule (26) cesse de travailler.

14. Equipement automatisé d'entretien de terrain selon la revendication 13, dans lequel un moyen est prévu pour empêcher une neutralisation du moyen (1 ; 29) de détection d'obstacle, pendant un travail normal de l'équipement.

15. Equipement automatisé d'entretien de terrain selon l'une quelconque des revendications précédentes, dans lequel le moyen de travail comprend un moyen (2) de tonte de pelouse.
